# EUROPEAN PATENT SPECIFICATION

(11) **EP 2 354 644 B1**
(45) Date of publication and mention of the grant of the patent: **07.01.2015**
(21) Application number: 11152662.0
(22) Date of filing: 31.01.2011
(51) Int. Cl.: F21V 7/00, F21V 14/04, F21S 8/12

(54) **Vehicular headlamp**
Fahrzeugscheinwerfer
Phare de véhicule

(30) Priority: 05.02.2010 JP 2010024197
(43) Date of publication of application: 10.08.2011
(73) Proprietor: Koito Manufacturing Co., Ltd., Tokyo 108-8711 (JP)
(72) Inventor: Mochizuki, Mitsuyuki, Shizuoka (JP)
(74) Representative: Hoffmann Eitle

(56) References cited:
- DE-B- 1 167 773
- GB-A- 1 212 231
- US-A- 5 060 120

## Description

### [Technical Field]

The present invention relates to vehicular headlamp. More particularly, the present invention relates to a technical field in which generation of glare light is prevented by moving, in the lateral direction, a reflective body having a pair of reflective surfaces facing substantially the lateral direction, and thus attaining an optimal radiation state according to the circumstances.

### [Related Art]

There are vehicular headlamps in which a plurality of light sources are arranged in the lateral direction, and lighting and unlighting of the plurality of light sources are individually controlled to form a desired light distribution pattern according to the circumstances (see, e.g., Patent Document 1 which discloses a vehicular headlamp according to the preamble of claim 1).

In the vehicular headlamp described in Patent Document 1, three light emitting diodes (LEDs) are used as light sources, and a high beam distribution pattern for irradiating a distant location is formed by the three light emitting diodes to irradiate different irradiation regions with light emitted from the respective light sources.

That is, the left irradiation region is irradiated with light that is emitted from the first light emitting diode, the central irradiation region is irradiated with light that is emitted from the second light emitting diode, and the right irradiation region is irradiated with light that is emitted from the third light emitting diode.

With such a configuration in which the plurality of irradiation regions are irradiated with light emitted from the respective light sources, the light source that irradiates the irradiation region where a preceding vehicle or an oncoming vehicle is present is unlit, thereby reducing generation of glare light to the preceding vehicle or the oncoming vehicle.

### [Patent Document 1]

Japanese Patent Application Laid-Open (Kokai) No. 2007-179969

### [Disclosure of the Invention]

### [Problem to be Solved by the Invention]

However, in the vehicular headlamp described in Patent Document 1, each irradiation region is irradiated with light emitted from a corresponding one of the light emitting diodes. Thus, the same number of light emitting diodes as that of irradiation regions is required, thereby increasing manufacturing cost accordingly.

Moreover, since each irradiation region is a predetermined range, the size and position of each irradiation region cannot be changed, and it is difficult to perform accurate light distribution control according to the position of the preceding vehicle or the oncoming vehicle.

Furthermore, it is desirable to increase luminance in the irradiation region where there is no preceding vehicle or no oncoming vehicle.

Thus, it is an object of a vehicular headlamp of the present invention to prevent generation of glare light, or the like by attaining an optimal radiation state according to the circumstances without increasing manufacturing cost.

### [Means for Solving the Problem]

In order to solve the above problem, in a vehicular headlamp, a lamp unit, which is a projector type lamp unit, is disposed inside a lamp outer casing formed by a cover and a housing, and the lamp unit includes a light source for emitting light, a reflector for reflecting, in a forward direction, light emitted from the light source, a projection lens for projecting the light emitted from the light source to radiate the light in the forward direction, and a reflective body that has a pair of reflective surfaces facing substantially a lateral direction, is located between the light source and the projection lens, and is movable in the lateral direction.

Thus, in the vehicular headlamp, the position and size of the radiation range vary according to the position of the reflective body, and light reflected by the pair of reflective surfaces is radiated in the forward direction.

### [Effects of the Invention]

A vehicular headlamp according to the present invention is a vehicular headlamp, in which a lamp unit which is a projector type lamp unit is disposed inside a lamp outer casing formed by a cover and a housing. The vehicular lamp is characterized in that the lamp unit includes a light source for emitting light, a reflector for reflecting, in a forward direction, light emitted from the light source, a projection lens for projecting the light emitted from the light source to radiate the light in the forward direction, and a reflective body that has a pair of reflective surfaces facing substantially a lateral direction, is located between the light source and the projection lens, and is movable in the lateral direction.

Thus, the vehicular headlamp according to the present invention is configured so as to form a desired light distribution pattern by blocking light by the reflective body that is movable in the lateral direction, and is not configured so that the irradiation region is divided and the same number of light sources as that of irradiation regions is disposed. This can reduce the number of light sources, and thus can reduce the manufacturing cast.

Moreover, since a required light distribution pattern can be formed according to the position to which the reflective body is moved, the size and position of the irradiation region can be arbitrarily changed, and an optimal radiation state can be attained according to the position where a preceding vehicle or an oncoming vehicle is present, whereby generation of glare light can be prevented.

Furthermore, light reflected by the reflective surfaces of the reflective body is superposed on light radiated in the forward direction without reaching the reflective surfaces of the reflective body. Thus, luminance of the light that is radiated in the forward direction can be increased accordingly.

In the invention according to claim 2, the light source is disposed as two light sources so as to be spaced apart from each other in the lateral direction, and the reflector for reflecting, in the forward direction, the light emitted from the respective light sources is disposed as two reflectors continuously in the lateral direction.

Thus, the number of different kinds of light distribution patterns can be increased, whereby the degree of freedom of light distribution control can be increased.

In the invention according to claim 3, a shade for blocking the light emitted from the light source is provided, and the reflective body is movable in a vertical direction with respect to the shade. Thus, light can be emitted to a required radiation region through a space between the shade and the reflective body, and the luminance can be increased.

In the invention according to claim 4, an upper surface of the reflective body is formed as an upper reflective surface. Thus, light reflected by the upper reflective surface passes between the shade and the reflective body, and is radiated in the forward direction, whereby the luminance can further be increased.

In the invention according to claim 5, the lamp outer casing and the lamp unit are disposed at each of both right and left ends of a vehicle body, and the reflective body of the left lamp unit and the reflective body of the right lamp unit are moved synchronously.

Thus, a region that is irradiated with light, and a region that is not irradiated with light as the light is blocked by the reflective body are clearly defined, whereby accurate light distribution control can be performed while increasing the light luminance.

### [Brief Description of the Drawings]

[FIG. 1] FIG. 1 is a schematic horizontal cross section of a vehicular headlamp, showing a best mode of the present invention together with FIGS. 2 to 9.
[FIG. 2] FIG. 2 is a schematic longitudinal cross section of the vehicular headlamp.
[FIG. 3] FIG. 3 is a diagram showing each mode in a double lighting state.
[FIG. 4] FIG. 4 is a diagram showing each mode in a single lighting state.
[FIG. 5] FIG. 5 is a diagram showing the state of a first split width variable mode in the double lighting state.
[FIG. 6] FIG. 6 is a diagram showing the state of a second split width variable mode in the single lighting state.
[FIG. 7] FIG. 7 shows cross-sectional views showing other examples of a reflective body.
[FIG. 8] FIG. 8 is a diagram showing a light distribution pattern that is formed when a low beam is radiated in a state in which a split is formed.
[FIG. 9] FIG. 9 is a diagram showing each mode in the case where one light source is provided.

### [Best Mode for Carrying Out the Invention]

Hereinafter, a best mode for carrying out a vehicular headlamp according to the present invention will be described with reference to accompanying drawings.

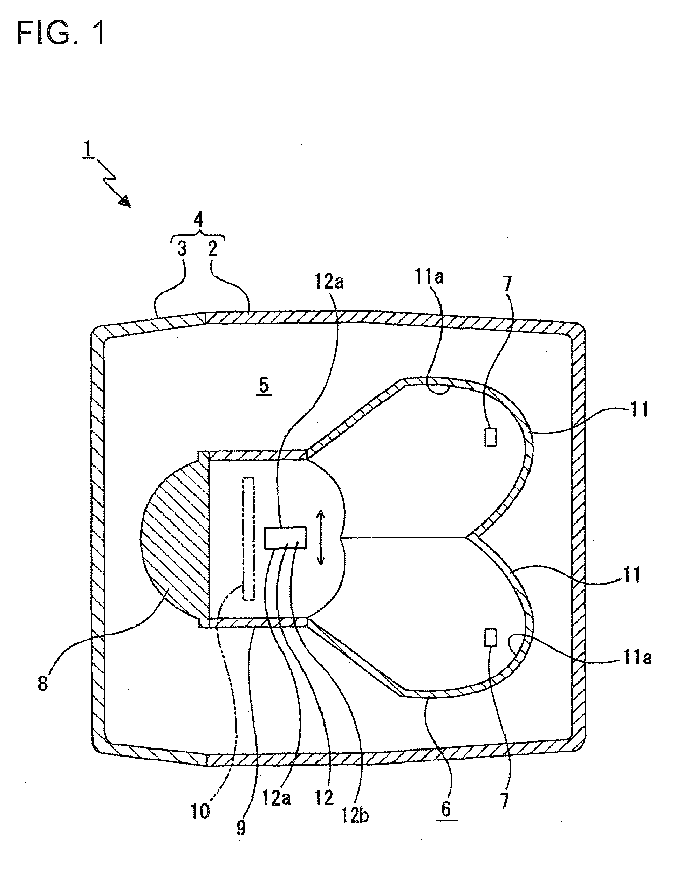

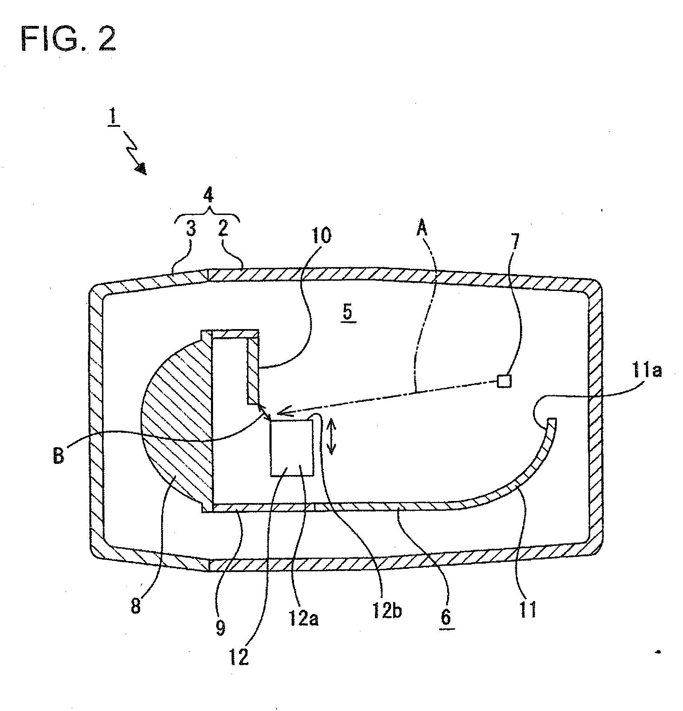

A vehicular headlamp 1 is disposed at each of both right and left ends of a vehicle body. As shown in FIGS. 1 and 2, the vehicular headlamp 1 includes a lamp housing 2 having a recess that opens forward, and a cover 3 closing the open face of the lamp housing 2, and a lamp outer casing 4 is formed by the lamp housing 2 and the cover 3. The inside of the lamp outer casing 4 is formed as a lamp chamber 5.

A lamp unit 6 is disposed in the lamp chamber 5. The lamp unit 6 is a so-called high beam lamp unit for irradiating a distant location. The lamp unit 6 is tiltably supported in the lamp housing 2 by an optical axis adjustment mechanism, not shown.

The lamp unit 6 is a so-called projector type lamp unit having light sources 7, 7, a projection lens 8, a lens holder 9, a shade 10, and reflectors 11, 11.

The light sources 7, 7 are disposed so as to be spaced apart from each other in the lateral direction. For example, light emitting diodes (LEDs) are used as the light sources 7, 7. Note that the light sources 7, 7 are not limited to the LEDs, and for example, other types of light sources such as discharge lamps and halogen lamps may be used.

The projection lens 8 is formed in, e.g., a generally hemispherical shape that protrudes forward.

The lens holder 9 is formed in a cylindrical shape. The outer periphery of the projection lens 8 is attached to the front end face of the lens holder 9, so that the projection lens 8 is held by the lens holder 9.

The shade 10 is formed in, e.g., a plate shape that faces the longitudinal direction, and has a function to block part of light emitted from the light sources 7, 7.

The reflectors 11, 11 are positioned on the rear side of the lens holder 9, and are disposed continuously in the lateral direction. The inner surfaces of the reflectors 11, 11 are formed as light reflective surfaces 11 a, 11 a.

A reflective body 12 is disposed between the projection lens 8 and the light sources 7, 7 in the lamp unit 6, and the reflective body 12 is movable in the lateral direction. In the lamp unit 6, the rear focal point of the projection lens 8 is substantially matched with the focal point of the reflectors 11, 11, and the reflective body 12 is located near the matched focal point when positioned in the central portion of its moving range. The reflective body 12 is moved in the lateral direction along a linear or gentle arc-shaped trajectory.

The reflective body 12 is formed in the shape of, e.g., a vertically elongated block (a rectangular parallelepiped), and both right and left side surfaces thereof are formed as reflective surfaces 12a, 12a.

When light is emitted from the light sources 7, 7 in the lamp unit 6, the emitted light is reflected by the light reflective surfaces 11a, 11a of the reflectors 11, 11, respectively, and is sequentially transmitted through the projection lens 8 and the cover 3 and radiated in the forward direction. At this time, part of the light is blocked by the shade 10.

Moreover, at this time, the light emitted from the light sources 7, 7 can reach the reflective body 12, depending on the position of the reflective body 12. Of the light emitted from the light sources 7, 7, the light that has reached the front surface of the reflective body 12 is blocked, whereas the light that has reached the reflective surfaces 12a, 12a is reflected in the forward direction by the reflective surfaces 12a, 12a. Thus, in the lamp unit 6, a light distribution pattern is varied according to the position of the reflective body 12.

The following two lighting states can be set in the lamp unit 6: a double lighting state in which the two light sources 7, 7 are lit; and a single lighting state in which one of the light sources 7 is lit and the other light source 7 is not lit.

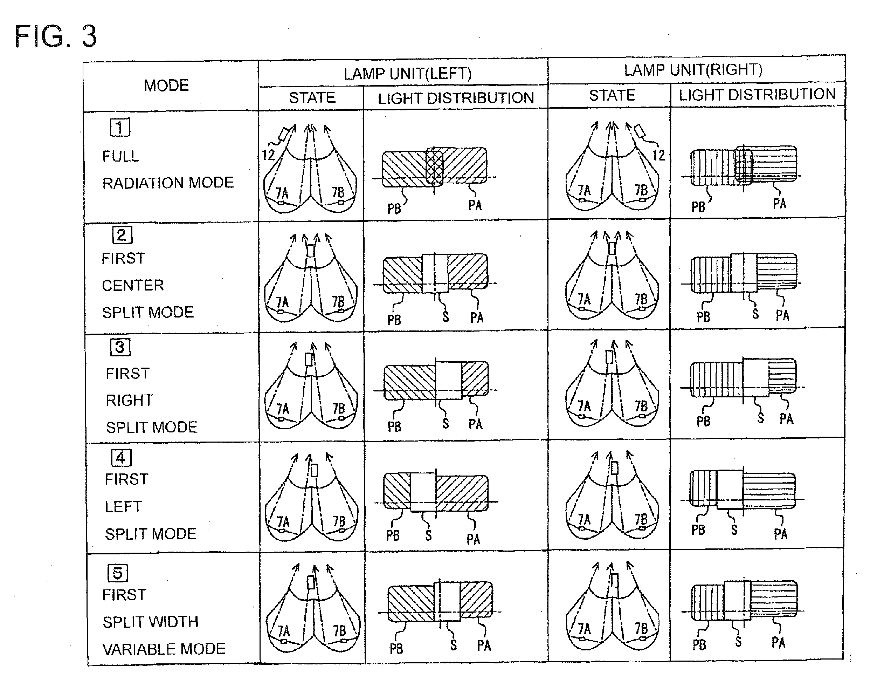

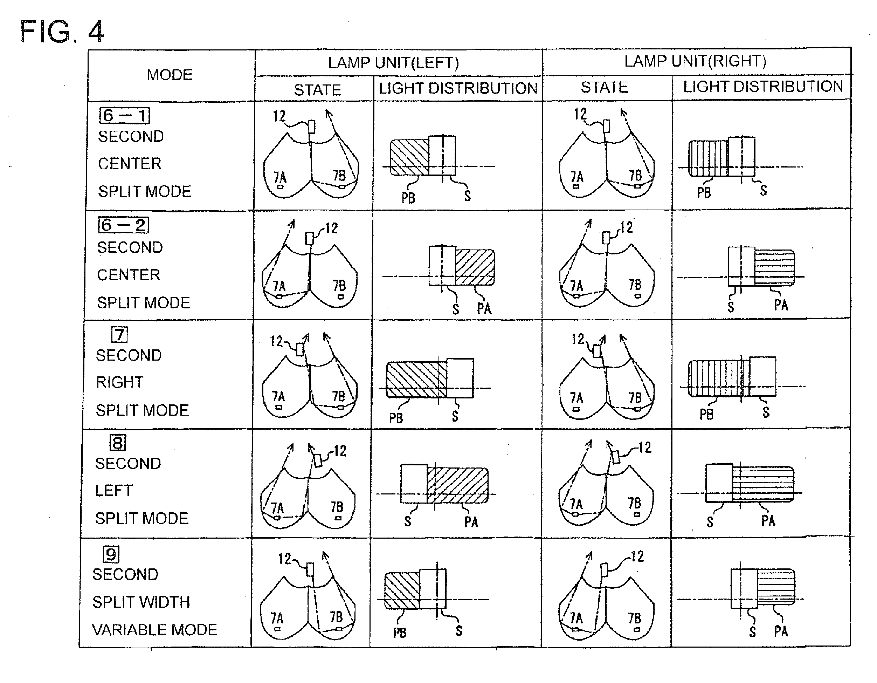

The light distribution patterns that are formed when light is emitted from the light sources 7, 7, ... of the vehicular headlamps 1, 1 will be described below (see FIGS. 3 and 4).

The lamp units 6, 6 are disposed in the vehicular headlamps 1,1, respectively, and for example, two light sources 7, 7 are disposed in each lamp unit 6. Light emitted from the light sources 7, 7 of the right vehicular headlamp 1 and light emitted from the light sources 7, 7 of the left vehicular headlamp 1 are superposed on each other at a forward position, and a light distribution pattern is formed by the superposed light.

In the lamp units 6, 6, the reflective bodies 12, 12 are synchronously moved in the lateral direction except for some cases.

A vehicle having the vehicular headlamps 1, 1 is provided with a detection system for detecting the presence of a preceding vehicle, an oncoming vehicle, and the like, and the reflective bodies 12, 12 are movable in the lateral direction based on the detection result of the detection system. For example, if a preceding vehicle, an oncoming vehicle, or the like is detected by the detection system, the reflective bodies 12, 12 can be moved to such a position that light emitted from the light sources 7, 7, ... is not radiated to the preceding vehicle, the oncoming vehicle, or the like. A region where the light is not blocked by the reflective bodies 12,12 is herein referred to as a split region.

First, the light distribution patterns in each mode of the double lighting state will be described (see FIG. 3). Note that in the following description, light sources 7A, 7B represent the two light sources 7, 7, and PA and PB represent irradiation regions that are irradiated with light emitted from the light sources 7A, 7B, respectively.

Mode 1 is a full radiation mode in which no light is blocked by the reflective bodies 12, 12.

In mode 1, each reflective body 12, 12 is positioned outside (on the left side or the right side of) a light passing region, and light emitted from the light sources 7, 7, ... is radiated without being blocked by the reflective bodies 12, 12. Light emitted from the light sources 7A, 7A and light emitted from the light sources 7B, 7B are superposed on each other in the central portion of the irradiation region, and radiated.

Mode 2 is a first center split mode in which light heading toward the central portion in the lateral direction of the irradiation region is blocked by the reflective bodies 12, 12.

In mode 2, each reflective body 12, 12 is positioned in the central portion of the light passing region, and part of light emitted from the light sources 7, 7, ... is blocked by the reflective bodies 12, 12. Of the light emitted from the light sources 7A, 7A and the light emitted from the light sources 7B, 7B, the light heading toward the central portion of the irradiation region is blocked by the reflective bodies 12, 12, and a split region S, which is a region that is not irradiated with light, is formed in the central region of the irradiation region.

For example, a preceding vehicle, an oncoming vehicle, or the like is present in the split region S at this time, and generation of glare light to the preceding vehicle, the oncoming vehicle, or the like is prevented.

Of the light emitted from the light sources 7, 7, ..., the light that has reached the reflective surfaces 12a, 12a, ... of the reflective bodies 12, 12 is reflected by the reflective surfaces 12a, 12a, ... and radiated in the forward direction. In each of the following modes as well, the light that has reached the reflective surfaces 12a, 12a, ... of the reflective bodies 12, 12 is similarly reflected by the reflective surfaces 12a, 12a, ... and radiated in the forward direction.

Mode 3 is a first right split mode in which part of light heading rightward in the irradiation region is blocked by the reflective bodies 12, 12.

In mode 3, each reflective body 12, 12 is positioned on the left side of the center of the light passing region, and part of light emitted from the light sources 7, 7, ... is blocked by the reflective bodies 12, 12. Of the light emitted from the light sources 7A, 7A, the light in the right end portion is blocked by the reflective bodies 12, 12, and a split region S is formed in a rightward part of the irradiation region. The position of the split region S is varied according to the positions to which the reflective bodies 12, 12 are moved.

For example, a preceding vehicle, an oncoming vehicle, or the like is present in the split region S at this time, and generation of glare light to the preceding vehicle, the oncoming vehicle, or the like is prevented.

Mode 4 is a first left split mode in which part of light heading leftward in the irradiation region is blocked by the reflective bodies 12, 12.

In mode 4, each reflective body 12, 12 is positioned on the right side of the center of the light passing region, and part of light emitted from the light sources 7, 7, ... is blocked by the reflective bodies 12, 12. Of the light emitted from the light sources 7B, 7B, the light in the left end portion is blocked by the reflective bodies 12, 12, and a split region S is formed in a leftward part of the irradiation region. The position of the split region S is varied according to the positions to which the reflective bodies 12, 12 are moved.

For example, a preceding vehicle, an oncoming vehicle, or the like is present in the split region S at this time, and generation of glare light to the preceding vehicle, the oncoming vehicle, or the like is prevented.

Mode 5 is a first split width variable mode in which part of light heading rightward in the irradiation region and part of light heading leftward in the irradiation region are blocked by the reflective bodies 12, 12, respectively.

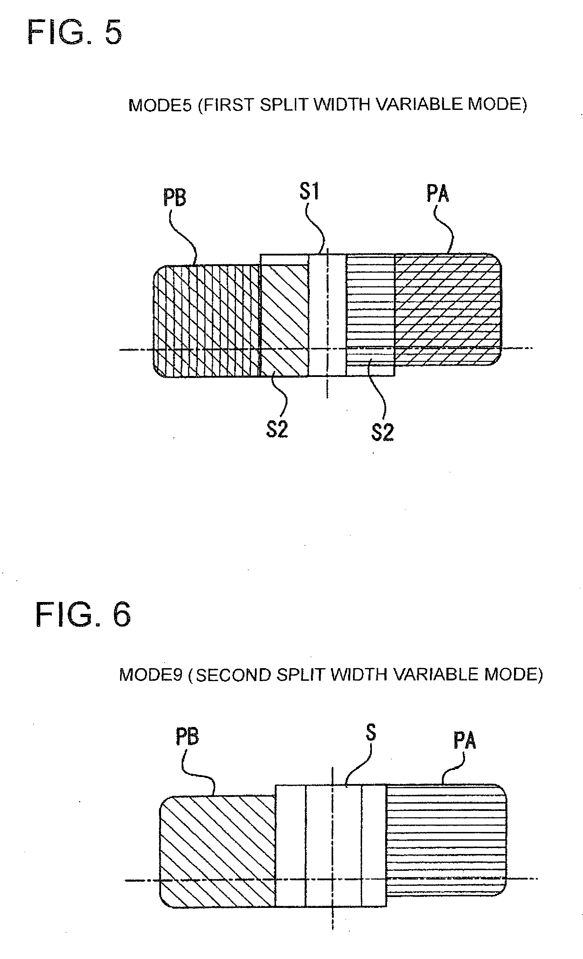

In mode 5, the reflective bodies 12, 12 are not moved synchronously. One of the reflective bodies 12 is positioned on the left side of the center of the light passing region, and the other reflective body 12 is positioned on the right side of the center of the light passing region, so that part of light emitted from the light sources 7, 7, ... is blocked by the reflective bodies 12, 12. Of the light emitted from the light source 7A of one of the lamp units 6, the light in the right end portion is blocked by one of the reflective bodies 12. Of the light emitted from the light source 7B of the other lamp unit 6, the light in the left end portion is blocked by the other reflective body 12. Thus, a split region S 1 is formed in the central portion of the irradiation region (see FIG. 5).

Split regions S2, S2 are formed on the left and right sides of the split region S1, respectively. The split regions S2, S2 are the regions that are formed by blocking the light emitted from one of the light sources 7A and the light emitted from the other light source 7B by the reflective bodies 12, 12, respectively, and radiating the light emitted from one of the light sources 7B and the light emitted from the other light source 7A. Thus, the split regions S2, S2 are the regions having lower luminance than that in the irradiation region PA formed by superposing the light beams emitted from the light sources 7A, 7A on each other, and the irradiation region PB formed by superposing the light beams from the light sources 7B, 7B on each other.

The widths of the split regions S1, S2, S2 are varied according to the positions to which the reflective bodies 12, 12 are moved. Thus, the degree of freedom of light distribution control can be increased.

For example, a preceding vehicle, an oncoming vehicle, or the like is present in the split regions S1, S2, S2 at this time, and generation of glare light to the preceding vehicle, the oncoming vehicle, or the like is prevented.

The light distribution patterns in each mode of the single lighting state will be described below (see FIG. 4). Note that in the following description, light sources 7A. 7B represent the two light sources 7, 7, and PA and PB represent irradiation regions that are irradiated with light emitted from the light sources 7A, 7B, respectively.

Mode 6-1 is a second center split mode in which light heading toward the central portion in the lateral direction of the irradiation region is blocked by the reflective bodies 12,12.

In mode 6-1, each reflective body 12, 12 is positioned in the central portion of the light passing region, and part of light emitted from the light sources 7, 7,... is blocked by the reflective bodies 12, 12. The light sources 7A, 7A are unlit, and of the light emitted from the light sources 7B, 7B, the light heading toward the central portion of the irradiation region is blocked by the reflective bodies 12, 12, respectively, and a split region S, which is a region that is not irradiated with light, is formed in the central region of the irradiation region.

For example, a preceding vehicle, an oncoming vehicle, or the like is present in the split region S at this time, and generation of glare light to the preceding vehicle, the oncoming vehicle, or the like is prevented.

Mode 6-2 is a second center split mode in which light heading toward the central portion in the lateral direction of the irradiation region is blocked by the reflective bodies 12, 12.

In mode 6-2, each reflective body 12, 12 is positioned in the central portion of the light passing region, and part of light emitted from the light sources 7, 7, ... is blocked by the reflective bodies 12, 12. The light sources 7B, 7B are unlit, and of the light emitted from the light sources 7A, 7A, the light heading toward the central portion of the irradiation region is blocked by the reflective bodies 12, 12, respectively, and a split region S, which is a region that is not irradiated with light, is formed in the central region of the irradiation region.

For example, a preceding vehicle, an oncoming vehicle, or the like is present in the split region S at this time, and generation of glare light to the preceding vehicle, the oncoming vehicle, or the like is prevented

Mode 7 is a second right split mode in which light heading rightward in the irradiation region is blocked by the reflective bodies 12, 12.

In mode 7, each reflective body 12, 12 is positioned on the left side of the center of the light passing region, and part of light emitted from the light sources 7, 7,... is blocked by the reflective bodies 12, 12. The light sources 7A, 7A are unlit, and of the light emitted from the light sources 7B, 7B, the light in the left end portion is blocked by the reflective bodies 12, 12, respectively, and a split region S is formed in a rightward part of the irradiation region. The position of the split region S is varied according to the positions to which the reflective bodies 12, 12 are moved.

For example, a preceding vehicle, an oncoming vehicle, or the like is present in the split region S at this time, and generation of glare light to the preceding vehicle, the oncoming vehicle, or the like is prevented.

Mode 8 is a second left split mode in which light heading leftward in the irradiation region is blocked by the reflective bodies 12, 12.

In mode 8, each reflective body 12, 12 is positioned on the right side of the center of the light passing region, and part of light emitted from the light sources 7, 7, ... is blocked by the reflective bodies 12, 12. The light sources 78, 7B are unlit, and of the light emitted from the light sources 7A, 7A, the light in the right end portion is blocked by the reflective bodies 12, 12, respectively, and a split region S is formed in a leftward part of the irradiation region. The position of the split region S is varied according to the positions to which the reflective bodies 12, 12 are moved.

For example, a preceding vehicle, an oncoming vehicle, or the like is present in the split region S at this time, and generation of glare light to the preceding vehicle, the oncoming vehicle, or the like is prevented.

Mode 9 is a second split width variable mode in which part of light heading leftward in the irradiation region and part of light heading rightward in the irradiation region are blocked by the reflective bodies 12, 12, respectively.

In mode 9, the reflective bodies 12, 12 are not moved synchronously. One of the reflective bodies 12 is positioned on the right side of the center of the light passing region, and the other reflective body 12 is positioned on the left side of the center of the light passing region, so that part of light emitted from the light sources 7, 7, ... is blocked by the reflective bodies 12, 12. One of the light sources 7A and the other light source 7B are unlit. Of the light emitted from the light source 7B of one of the lamp units 6, the light in the left end portion is blocked by one of the reflective bodies 12. Of the light emitted from the light source 7A of the other lamp unit 6, the light in the right end portion is blocked by the other reflective body 12. Thus, a wide split region S is formed in the central portion of the irradiation region (see FIG. 6). The width of the split region S is varied according to the positions to which the reflective bodies 12, 12 are moved. Thus, the degree of freedom of light distribution control can be increased.

For example, a preceding vehicle, an oncoming vehicle, or the like is present in the split region S at this time, and generation of glare light to the preceding vehicle, the oncoming vehicle, or the like is prevented.

As described above, each vehicular headlamp 1 is configured so as to form a desired light distribution pattern by blocking light by the reflective body 12 that is movable in the lateral direction, and is not configured so that the irradiation region is divided and the same number of light sources as that of irradiation regions is disposed. This can reduce the number of light sources 7, and thus can reduce the manufacturing cost.

Moreover, since a required light distribution pattern can be formed according to the position to which the reflective body 12 is moved, the size and position of the irradiation region can be arbitrarily changed, and an optimal radiation state can be attained according to the position where a preceding vehicle or an oncoming vehicle is present, whereby generation of glare light can be prevented.

Furthermore, light reflected by the reflective surfaces 12a, 12a of the reflective body 12 is superposed on light radiated in the forward direction without reaching the reflective surfaces 12a, 12a of the reflective body 12. Thus, luminance of the light that is radiated in the forward direction can be increased accordingly.

Moreover, since the two light sources 7, 7, and the two reflectors 11,11 that are disposed continuously in the lateral direction are disposed in each vehicular headlamp 1, the number of different kinds of light distribution patterns can be increased, whereby the degree of freedom of light distribution control can be increased.

In addition, by synchronously moving the reflective bodies 12, 12 in each lamp unit 6, 6 of the left and right vehicular headlamps 1, 1 in the lateral direction, the region that is irradiated with light and the region where a split is formed are clearly defined, whereby accurate light distribution control can be performed while increasing the light luminance.

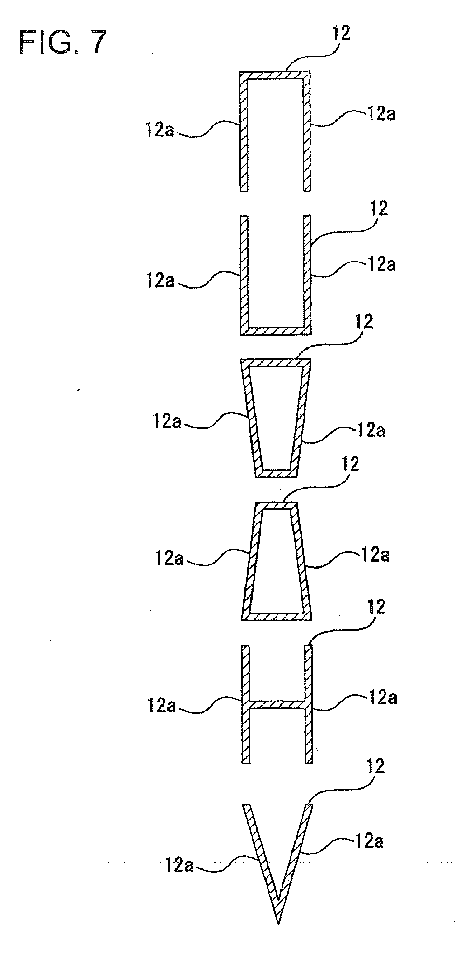

Note that although the reflective bodies 12 formed in the shape of a block are described above as an example, the reflective bodies 12 may have other shape as long as they have the reflective surfaces 12a, 12a facing substantially the lateral direction. For example, as shown in FIG. 7, the reflective bodies 12 may have a U-shape, a trapezoidal shape, an H-shape, a V-shape, or the like, which opens forward or rearward in a horizontal cross section.

As described above, although the lamp unit 6 provided in the vehicular headlamp 1 is a high beam lamp unit for radiating a distant location, the vehicle is provided also with a low beam lamp unit for radiating a nearby location. When light is radiated from the high beam lamp unit, light is also radiated from the low beam lamp unit.

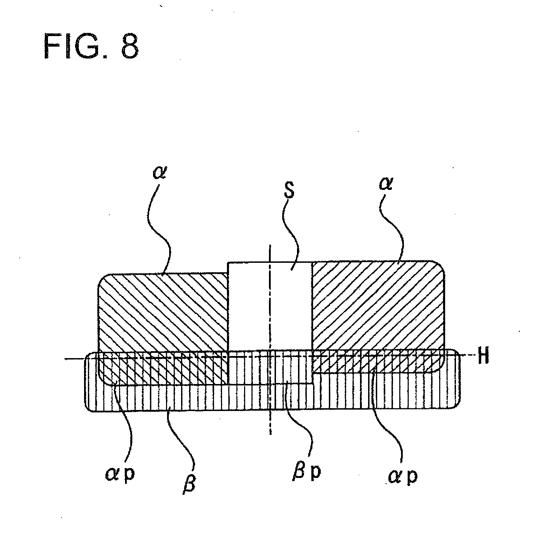

Light a, α radiated from the high beam lamp unit 6 is superposed on part of light β emitted from the low beam lamp unit at a position near a horizontal cutline H (see FIG. 8). In the case where the split S is formed in the light distribution pattern at this time, a portion β p between superposed portions αp, αp appears dark because the portions αp, αp are present on the right and left sides of the portion βp.

Thus, in the vehicular headlamp 1, the reflective body 12 is made movable in the vertical direction in addition to the lateral direction so that the part βp does not appear dark (see FIG. 2).

That is, by moving the reflective body 12 to a position below the shade 10, a space B through which light A radiated to the part βp passes is formed between the shade 10 and the reflective body 12, and the light A that has passed through the space B is superposed on the part βp so that the part βp does not appear dark.

Since the reflective body 12 is thus movable in the vertical direction, light can be emitted to a required irradiation region, and luminance can be increased.

Note that in the case where the reflective body 12 is movable in the vertical direction, the upper surface of the reflective body 12 may be formed as an upper reflective surface 12b. By forming the upper surface of the reflective body 12 as the upper reflective surface 12b, light reflected by the upper reflective surface 12b passes between the shade 10 and the reflective body 12, and is radiated in the forward direction. Thus, the luminance can further be increased.

Although an example in which two light sources 7, 7 and two reflectors 11, 11 are disposed in the lamp unit 6 is described above, the number of light sources 7 and the number of reflectors 11 are not limited to two, and any number of light sources 7 and any number of reflectors 11 may be disposed.

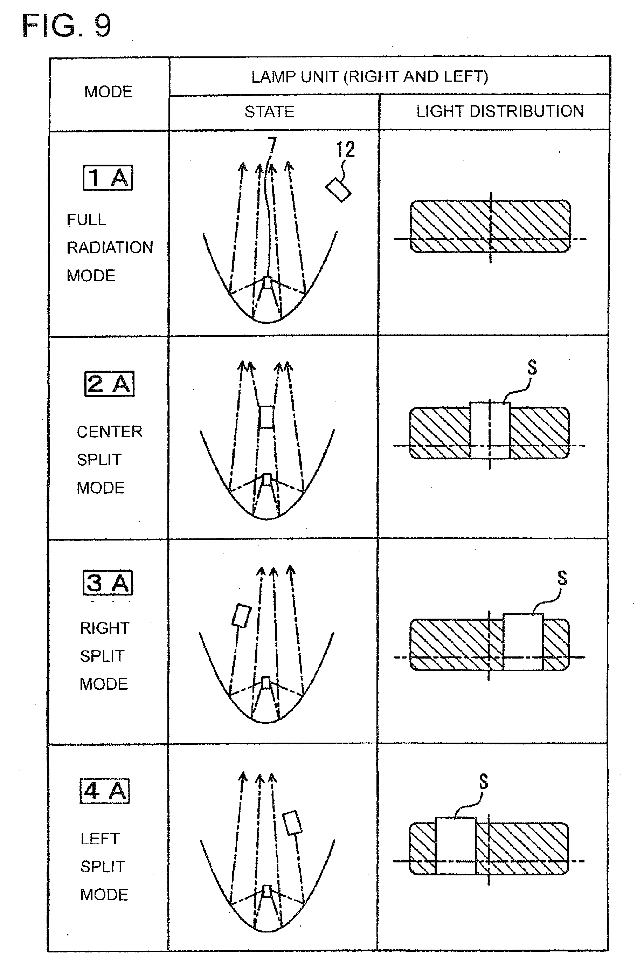

Light distribution patterns that are formed when light is emitted from lamp units each having one light source 7 will be described below as an example (see FIG. 9).

Light emitted from the light source 7 of the right vehicular headlamp 1 and light emitted from the light source 7 of the left vehicular headlamp 1 are superposed on each other at a forward position, and a light distribution pattern is formed by the superposed light. The reflective bodies 12, 12 are synchronously moved in the lateral direction.

Since a light distribution pattern that is formed by light emitted from the light source 7 of the right vehicular headlamp 1 is the same as a light distribution pattern that is formed by light emitted from the light source 7 of the left vehicular headlamp 1, only the states and the light distribution patterns of one of the lamp units are shown in FIG. 9.

Mode 1A is a full radiation mode in which no light is blocked by the reflective bodies 12, 12.

In mode 1A, each reflective body 12, 12 is positioned outside (on the left side or the right side of) the light passing region, and light emitted from the light sources 7, 7 is radiated without being blocked by the reflective bodies 12, 12.

Mode 2A is a center split mode in which light heading toward the central portion in the lateral direction of the irradiation region is blocked by the reflective bodies 12, 12.

In mode 2A, each reflective body 12, 12 is positioned in the central portion of the light passing region. Part of light emitted from the light sources 7, 7 is blocked by the reflective bodies 12, 12, and a split region S is formed in the central region of the irradiation region.

For example, a preceding vehicle, an oncoming vehicle, or the like is present in the split region S at this time, and generation of glare light to the preceding vehicle, the oncoming vehicle, or the like is prevented.

Mode 3A is a right split mode in which part of light heading rightward in the irradiation region is blocked by the reflective bodies 12, 12.

In mode 3A, each reflective body 12, 12 is positioned on the left side of the center of the light passing region. Part of light emitted from the light sources 7, 7 is blocked by the reflective bodies 12, 12, and a split region S is formed in a rightward part of the irradiation region. The position of the split region S is varied according to the positions to which the reflective bodies 12, 12 are moved.

For example, a preceding vehicle, an oncoming vehicle, or the like is present in the split region S at this time, and generation of glare light to the preceding vehicle, the oncoming vehicle, or the like is prevented.

Mode 4A is a left split mode in which part of light heading leftward in the irradiation region is blocked by the reflective bodies 12, 12.

In mode 4A, each reflective body 12, 12 is positioned on the right side of the center of the light passing region. Part of light emitted from the light sources 7, 7 is blocked by the reflective bodies 12, 12, and a split region S is formed in a leftward part of the irradiation region. The position of the split region S is varied according to the positions to which the reflective bodies 12, 12 are moved.

For example, a preceding vehicle, an oncoming vehicle, or the like is present in the split region S at this time, and generation of glare light to the preceding vehicle, the oncoming vehicle, or the like is prevented.

The shape and structure of each part in the above best mode are merely shown as an example of embodiment that is performed when carrying out the present invention, and should not be construed as limiting the technical scope of the present invention.

### [Description of the Reference Numerals]

- 1: VEHICULAR HEADLAMP
- 2: LAMP HOUSING
- 3: COVER
- 4: LAMP OUTER CASING
- 6: LAMP UNIT
- 7: LIGHT SOURCE
- 8: PROJECTION LENS
- 11: REFLECTOR
- 12: REFLECTIVE BODY
- 12a: REFLECTIVE SURFACE
- 12b: UPPER REFLECTIVE SURFACE

## Claims

1. A vehicular headlamp (1), in which a lamp unit , which is a projector type lamp unit (6), is disposed inside a lamp outer casing (4) formed by a cover (3) and a housing (2);
the lamp unit (6) includes
a light source (7, 7a) for emitting light,
a reflector (11) for reflecting, in a forward direction, light emitted from the light source (7, 7a)
a projection lens (8) for projecting the light emitted from the light source (7, 7a) to radiate the light in the forward direction, the vehicular headlamp **characterized in that**
a reflective body (12) that has a pair of reflective surfaces facing substantially a lateral direction, is located between the light source (7, 7a) and the projection lens (8), and is movable in the lateral direction.

2. The vehicular headlamp according to claim 1, **characterized in that**
the light source is disposed as two light sources so as to be spaced apart from each other in the lateral direction, and
the reflector for reflecting, in the forward direction, the light emitted from the respective light sources is disposed as two reflectors continuously in the lateral direction.

3. The vehicular headlamp according to claim 1 or 2, **characterized in that**:
a shade for blocking the light emitted from the light source is provided, and the reflective body is movable in a vertical direction with respect to the shade.

4. The vehicular headlamp according to claim 3, **characterized in that**
an upper surface of the reflective body is formed as an upper reflective surface.

5. The vehicular headlamp according to claim 1, 2, 3, or 4, **characterized in that**
the lamp outer casing and the lamp unit are disposed at each of both right and left ends of a vehicle body, and
the reflective body of the left lamp unit and the reflective body of the right lamp unit are moved synchronously.

## Patentansprüche

1. Fahrzeugscheinwerfer (1), bei dem eine Leuchteneinheit, die eine Projektionstyp-Leuchteneinheit (6) ist, in einem äußeren Leuchtengehäuse (4) angeordnet ist, das durch eine Abdeckung (3) und ein Gehäuse (2) ausgebildet ist,
wobei die Leuchteneinheit (6) aufweist
eine Lichtquelle (7, 7a) zum Emittieren von Licht, einen Reflektor (11) zum in einer Vorwärtsrichtung Reflektieren von Licht, das von der Lichtquelle (7, 7a) emittiert wurde,
eine Projektionslinse (8) zum Projizieren des von der Lichtquelle (7, 7a) emittierten Lichts, um das Licht in die Vorwärtsrichtung zu strahlen, wobei der Fahrzeugscheinwerfer **dadurch gekennzeichnet ist, dass**
ein Reflexionskörper (12), der ein Paar von reflektierenden Flächen aufweist, die im Wesentlichen einer seitlichen Richtung zugewandt sind, zwischen der Lichtquelle (7, 7a) und der Projektionslinse (8) angeordnet ist und in der seitlichen Richtung bewegbar ist.

2. Fahrzeugscheinwerfer nach Anspruche 1, **dadurch gekennzeichnet, dass**
die Lichtquelle als zwei Lichtquellen vorgesehen ist, sodass diese voneinander in der seitlichen Richtung beabstandet sind, und
der Reflektor zum in der Vorwärtsrichtung Reflektieren des von den jeweiligen Lichtquellen emittierten Lichts als zwei in der seitlichen Richtung kontinuierliche Reflektoren vorgesehen ist.

3. Fahrzeugscheinwerfer nach Anspruch 1 oder 2, **dadurch gekennzeichnet, dass**
ein Lichtschutz zum Abschirmen des von der Lichtquelle emittierten Lichts vorgesehen ist, und der Reflexionskörper in einer vertikalen Richtung in Bezug auf den Lichtschutz bewegbar ist.

4. Fahrzeugscheinwerfer nach Anspruch 3, **dadurch gekennzeichnet, dass**
eine obere Fläche des Reflexionskörpers als eine obere reflektierende Fläche ausgebildet ist.

5. Fahrzeugscheinwerfer nach Anspruch 1, 2, 3 oder 4, **dadurch gekennzeichnet, dass**
das äußere Leuchtengehäuse und die Leuchteneinheit bei jedem von beiden rechten und linken Enden eines Fahrzeugkörpers angeordnet sind und
der Reflexionskörper der linken Leuchteneinheit und der Reflexionskörper der rechten Leuchteneinheit synchron bewegt werden.

## Revendications

1. Phare de véhicule (1), dans lequel une unité de lampe, qui est une unité de lampe de type projecteur (6), est disposée à l'intérieur d'un boîtier externe (4) de lampe formé par un couvercle (3) et un logement (2),
l'unité de lampe (6) comporte
une source de lumière (7, 7a) permettant d'émettre de la lumière.
un réflecteur (11) permettant de réfléchir, dans une direction vers l'avant, la lumière émise par la source de lumière (7, 7a),
une lentille de projection (8) permettant de projeter la lumière émise par la source de lumière (7, 7a) afin de rayonner de la lumière dans la direction vers l'avant, le phare de véhicule étant **caractérisé en ce que**
un corps réfléchissant (12) qui a une paire de surfaces réfléchissantes faisant face substantiellement à une direction latérale, est situé entre la source de lumière (7, 7a) et la lentille de projection (8) et peut se déplacer dans la direction latérale.

2. Phare de véhicule selon la revendication 1, **caractérisé en ce que**
la source de lumière est disposée sous forme de deux sources de lumière de manière à être espacées l'une de l'autre dans la direction latérale, et
le réflecteur permettant de réfléchir, dans la direction vers l'avant, la lumière émise à partir des sources de lumière respectives est disposé sous forme de deux réflecteurs de manière continue dans la direction latérale.

3. Phare de véhicule selon la revendication 1 ou 2, **caractérisé en ce que** :
un écran permettant de bloquer la lumière émise par la source de lumière est prévu, et le corps réfléchissant peut se déplacer dans une direction verticale par rapport à l'écran.

4. Phare de véhicule selon la revendication 3, **caractérisé en ce que**
une surface supérieure du corps réfléchissant est formée sous forme d'une surface réfléchissante supérieure.

5. Phare de véhicule selon la revendication 1, 2, 3, ou 4, **caractérisé en ce que**
le boîtier externe de lampe et l'unité de lampe sont disposés au niveau de chacune des deux extrémités gauche et droite d'une carrosserie de véhicule, et
le corps réfléchissant de l'unité de lampe gauche et le corps réfléchissant de l'unité de lampe droite sont déplacés de manière synchrone.
